# EUROPEAN PATENT APPLICATION

(11) **EP 3 163 255 A1**
(43) Date of publication of application: **03.05.2017**
(21) Application number: 16196920.9
(22) Date of filing: 02.11.2016
(51) Int. Cl.: G01D 4/00

(54) **ELECTRICITY METER READING EQUIPMENT**

(30) Priority: 02.11.2015 PT 2015108925
(71) Applicant: EDP Comercial - Comercializacao de Energia, S.A., 1250-162 Lisbon (PT)
(72) Inventor: Neves Geirinhas Rocha, Pedro Manuel, 2795-038 Linda-a-Velha (PT); Coelho de Moura Antunes, Tiago Miguel Baltazar, 1990-366 Lisbon (PT); Bolais Mónica, Fernando Nunes, 3810-063 Aveiro (PT); Ataíde Corga, Álvaro Malheiro, 3840-502 Santo António de Vago (PT)
(74) Representative: Ferreira, Maria Silvina

(57) **Abstract**

The present application describes an equipment for reading electricity meters.

The reading equipment disclosed herein is a small box, located inside a smart meter and connected to it through a physical cable connection. In addition, the reading equipment comprises an interface for electric network connection, both for power purposes and for information communication purposes, through PLC - power line communication - technology.

The main function of the present meter reading equipment, is to read information from the smart meter and to send it to a home automation system or other value-added services provided to the consumer, in real time, or with the speed needed for the service intended to be provided with that data.

## Description

### Technical domain

The present application describes an electricity meter reading equipment.

### Background

Up until a few years ago the electricity meter counting was done by technical staff or by the user through manual reading. In the last years the smart electricity meters started to gain presence in the market, also known as smart meters. These smart meters can be read remotely, typically by the companies that operate the electrical grid, and provide data about the electric power consumption, with the possibility of obtaining detailed consumption information at each 15 minute interval.

The entry of smart meters is being a very significant step for the companies that manage the electrical grid, because they allow the meter reading and configuration to be done remotely, and furthermore contribute to a more reliable data collection, when compared to manual reading, since the consumption can be measured in detail periodically.

Typically smart meter data collection is done through the distribution network operator. The meter data is sent periodically and registered in the network operator's databases and thereafter made available for the purposes for which they are intended, namely determining the values for energy consumption billing. This process usually has significant delays and that means that the information on consumption is only available some time after the moment of actual consumption. These delays make the smart meters consumption information, which is so content rich, unattractive for power management systems that are placed in the consumption location, for example in a house. Unattractive because the information is available too late.

This delay means, for example, that the consumption management system placed in a particular location would only present the data to the user with a significant delay. This situation is currently unacceptable to provide an energy management service, wherein the users expect that the system works in real-time. That is, the user expects that when he wants to visualize his house's consumption he can see the consumption in that moment, not just a past consumption history. Another consequence of this delay is that some types of functions become impossible to implement using the data of the smart meter. One of them is, for example, controlling the equipments according to the current instantaneous consumption, which are of interest for solar energy applications in self-consumption.

Therefore some smart meters have a communication port to which local power management systems can be connected. Through this port consumption data can be read in real-time or the load diagrams of previous moments can be downloaded. But connecting the local power management systems to the communication port of these meters presents the following problems:
- Power supply. For an equipment to connect to the smart meter it has to be connected to the electrical grid or powered by batteries. Battery power on an equipment that remains in permanent communication is not recommended and results on frequent replacement of batteries/recharging. And in the immediate vicinity of the smart meter, very often, there is no power supply. This happens because the meter is frequently outside of the housing, at distances and with architectural barriers that may be an obstacle to cable passage.
- Data transmission. Sending the read data from the smart meter usually has to be done to another component of the power management system, for example a gateway, or to the internet. In the vicinity of the smart meter the radio transmission conditions to the housing using the typical protocols, for example WiFi, zigbee, enocean, among others, frequently presents serious difficulties, either because of the distance or because of the architectural barriers. On the other hand, sending the signals through cable presents problems inherent to the previously mentioned cable passage.

As examples of technical disclosures that represent the state of the art, the document US 2003158677 A1 describes a system and a method for monitoring the use of energy in a power line. The mentioned system comprises an electricity metering device coupled to the power line and comprising a non-volatile non-battery-powered data-storage device and a data collector.

In turn, the document WO 0148723 A1 discloses an automatic meter reading system, wireless, that remotely reads integrated energy consumption values. An image sensor module is installed in a predetermined portion of an integration meter to capture the image count shown in the integration meter, converting it into an electrical signal. The main processing unit generates a numeric code corresponding to the mentioned image and posteriorly transmits it through radio module to a reading center.

In both documents, the technologies disclosed in them involve a high complexity that forbids integrating their respective systems with the smart meters already available in the market. Effectively the practical implementation of any of the approaches implies restructuring the electrical grid for installation effects, which has high costs associated that may discourage potential users.

### Summary

The present application describes an electricity meter reading equipment characterized by being installed inside the smart electricity meter and comprising the following components:
- a communication module, which includes:
   ∘ a communication interface, configured to operate according to the PLC technology, connecting the mentioned reading equipment to the electrical distribution grid;
   ∘ a communication interface configured to establish a physical connection, through cable, with the smart meter;
- at least a control button;

On another embodiment, the status indicator of the electricity meter reading equipment uses LED or OLED technology.

In yet another embodiment, the electricity meter reading equipment comprises an additional communication module, configured to establish a wireless communication.

In an embodiment, the additional communication module of the electricity meter reading equipment is configured to operate according to the standards that define the GSM and/or GPRS and/or 3G and/or 4G and/or 5G technologies.

### General description

In order to overcome the problems identified on the prior art, the present application describes an electricity meter reading equipment that comprises a communication module configured to establish a communication interface with:
- the smart meter, through a physical connection through cable;
- external components, integrating a home automation system, or other value-added services to the consumer, through the PLC (power line communication) technology, using the electrical conductors that power the smart meter itself.

In alternative to the second point previously mentioned, the connectivity to other components of a home automation system or other value-added services to the consumer may be done by sending the data through any adequate data transfer method, for example GSM, GPRS, 3G, 4G or 5G, to a server that is part of those services, or that is connected to them.

The reading equipment proposed has reduced dimensions, spatially adapted in order to favor its installation inside the smart meter box.

Throughout this application an electricity smart meter is considered as the electricity meter that sends the reading data automatically to the network operator by PLC technology or by any adequate data transfer method. Despite the existence of such counters that use this type of technology, the protocols are substantially different and the architecture/dimension of the system makes it so that in practice the data is not quickly available. The interest of the equipment presented here is to make this data available "to the other side of the meter", that is to the client / home automation / other services in real-time, instead of, for example, with a day or days of delay.

This installation inside of the meter presents the following advantages:
- It is possible to connect the equipment through a connection to the power supply already existent inside the smart meter, the makes it unnecessary passing supplementary power cables;
- Communication with other home automation elements may be realized through electric conductors that carry power from the smart meter to the consumption location, through PLC technology, using the already existent conductors and, this way, avoid resorting to additional communication interfaces, which would represent an unnecessary cost and many times would not be practical to be carried out. In alternative, the communication can be made through any adequate data transfer method, as mentioned previously;
- Resorting to PLC technology represents a more reliable communication option in the application context of the present equipment, when compared with a radio communication, since the distances and architectural barriers involved may hinder or prevent this kind of communication.

The proposed electricity meter reading equipment comprises:
- a communication module, which includes:
   ∘ a communication interface configured to operate according to the PLC technology in order to connect the equipment to the electrical distribution grid, either for powering purposes or as a communication channel;
   ∘ a communication interface to establish a physical connection, through cable, with the smart meter;
- at least a control button;
- Optionally, at least a status indicator, which can be LED, OLED, or another illumination technology with reduced power consumption;
- Optionally an additional communication module, configured to operate according to the standards that define as GSM and/or GPRS and/or 3G and/or 4G and/or 5G technologies, or another type of adequate network.

All the mentioned elements are contained in a small box, especially adapted to be installed inside a smart meter.

The main job of this electricity meter reading equipment is to read information from the smart meter, making that information arrive at a home automation system or other value-added services provided to the consumer, in real-time, or with the speed needed for the service intended to be provided with that data.

This electricity meter reading equipment unlocks value/added services that depend on the availability of consumption data in real-time or close, that would not be possible to provide using the available consumption data with significant delays by the grid operator.

This equipment is installed inside the smart meter, allowing to solve the power supply issue and allowing communication through PLC technology, through the existing electrical installation's power supply cables.

The advantages of this electricity meter reading equipment are:
- To be powered by energy derived from the smart meter itself, on its own exit, that is this equipment's power supply is metered by the smart meter as power consumed. Thus it becomes unnecessary to switch/recharge batteries nor is it necessary to pass cables to power this equipment;
- Communicate data to other external systems using PLC technology, that is communication through the electrical distribution grid, using the already existing connection between the smart meter and the housing. That is it is not necessary to project an additional communication network for signal transmission/consumption data;
- It is contained inside the smart meter's box itself, with the exception of the equipment's fixation in the vicinity of the meter;
- Communication mode flexibility, since in alternative to the PLC communication, the information may be sent by any adequate data transfer method to a server that makes the data available to an home automation system or other functions wherein they are used to provide services to the consumer.

In short this equipment allows to provide smart meter data for home automation services or others that need to be made quickly available to the consumer, in real-time, or with the speed needed for the service intended to be provided with that data. This fact represents an evolutionary step, having as a starting point the known prior art, since the retrieved data were primarily compiled and made available with significant delays by the grid operator. That is, this technology represents a practical way to unlock value/added services that can now be performed using the already existing data from the smart meter.

### Brief figure description

For an easier understanding of the art figures are attached, which, represent preferred embodiments which, however, do not intend to limit the subject of the present application.

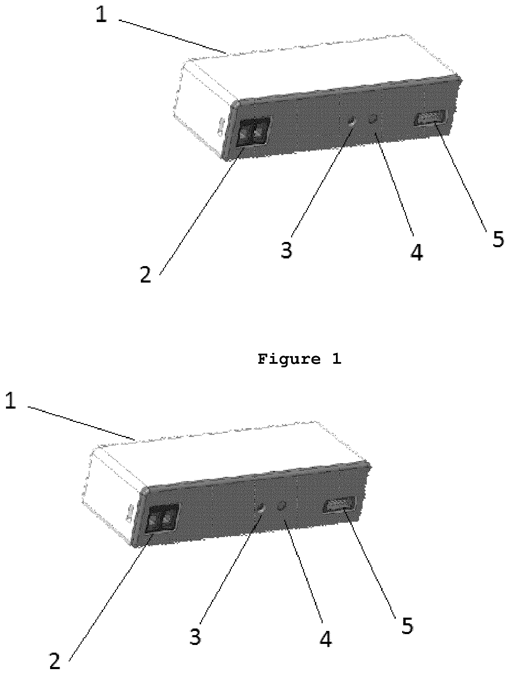

Figure 1 describes a perspective view of an embodiment of the electricity meter reading equipment, wherein the reference numbers relate to the following elements:
1 - Box;
2 - Contacts for power supply connection and PLC signal output;
3 - Control button;
4 - Status indicator;
5 - Smart meter communication port.

### Embodiments description

Thereafter, some embodiments will be described in more detail, which however do not intend to limit the scope of the present application.

The electricity meter reading equipment comprises the following components:
- a communication module, which includes:
   ∘ a communication interface (2) configured to operate according to the PLC technology to connect the equipment to the electrical distribution grid, either for powering purposes or as a communication channel;
   ∘ a communication interface (5) to establish a physical connection, through cable, with the smart meter;
- at least a control button (3);
- Optionally, at least a status indicator (4), which can be LED, OLED, or another illumination technology with reduced power consumption;
- Optionally an additional communication module, configured to operate according to the standards that define as GSM and/or GPRS and/or 3G and/or 4G and/or 5G technologies, or another type of adequate network.

All the mentioned elements are contained inside a small dimension box, spatially adapted to be installed inside a smart meter.

The electricity meter reading equipment may output an error signal anytime a failure occurs. Still, in some embodiments a status indicator (4) can be included useful for manual operations, like for example installation, local communication status indication, errors, etc.

In an embodiment of the present reading equipment, this can be found placed inside a smart meter, establishing communication with it through a communication interface through cable, and an external connection with a hub or gateway, for real-time data sending, through the additional communication module, configured to operate according to the standards that define the GSM and/or GPRS and/or 3G and/or 4G and/or 5G technologies.

The present technology is not, naturally, in any way restricted to the embodiments described in this document and someone skilled in the art can predict many technology modification possibilities without departing from the general idea, as defined in the claims.

All the above-described embodiments are obviously combinable with each other. The following claims define additional preferred embodiments.

## Claims

1. Electricity meter reading equipment **characterized by** being installed inside the smart electricity meter and comprising the following components:
- a communication module, which includes:
- a communication interface, configured to operate according to the Power Line Communication technology, connecting the above mentioned reading equipment to the electrical distribution grid;
- a communication interface configured to establish a physical connection, through cable, with the smart meter;
- at least a control button.

2. Electricity meter reading equipment according to claim 1, **characterized by** comprising a status indicator.

3. Electricity meter reading equipment according to claim 2, **characterized by** the status indicator utilizing LED or OLED technology.

4. Electricity meter reading equipment according to any of the previous claims, **characterized by** comprising an additional communication module, configured to establish a wireless communication.

5. Electricity meter reading equipment according to claim 4, **characterized by** the communication module being configured to operate according to the standards defining the GSM and/or GPRS and/or 3G and/or 4G and/or 5G technologies.
